# EUROPEAN PATENT SPECIFICATION

(11) **EP 4 518 664 B1**
(45) Date of publication and mention of the grant of the patent: **11.02.2026**
(21) Application number: 23725663.1
(22) Date of filing: 08.05.2023
(51) Int. Cl.: A22C 11/02

(54) **MAGAZINE AND REVOLVER TO PROVIDE PACKAGING CASING FOR PRODUCING SAUSAGE-SHAPED PRODUCTS**
MAGAZIN UND DREHSCHEIBE ZUM BEREITSTELLEN EINER VERPACKUNGSHÜLLE ZUM PRODUZIEREN VON WURSTFÖRMIGEN PRODUKTEN
CHARGEUR ET PLATEAU TOURNANT POUR FOURNIR UNE ENVELOPPE D'EMBALLAGE POUR LA PRODUCTION DE PRODUITS EN FORME DE SAUCISSES

(30) Priority: 06.05.2022 EP 22172191
(43) Date of publication of application: 12.03.2025
(73) Proprietor: Poly-clip System GmbH & Co. KG, 65795 Hattersheim (DE)
(72) Inventor: MEYRAHN, Joachim, 64390 Erzhausen (DE); MÜNKER, Udo, 63505 Langenselbold (DE); BABINSKY, André, 51580 Reichshof (DE)
(74) Representative: Eisenführ Speiser
(86) International application number: PCT/EP2023/062118
(87) International publication number: WO 2023/214090

(56) References cited:
- US-A- 4 306 334
- US-A- 6 139 416

## Description

The present invention relates to a magazine for providing at least one tubular-shaped packaging casing suitable for receiving a flowable filling material in the production of sausage-shaped products, in particular sausages, and further to a revolver with multiple magazines and production machine for filling and closing a tubular-shaped packaging casing, in particular a clipping machine.

In practice, it is known that, for example in the production of sausage-shaped products, in particular sausages, filling material is fed by a filling unit trough a filling tube into a tubular or bag-shaped packaging casing. A filling unit or filling machine provides and conveys the filling material. The packaging casing can be stored on said filling tube and can be closed at its front end and its back end by at least one closure clip each as a closure means e.g., by a clipping machine and/or clipping device of a clipping machine. The tubular packaging casing is pulled-off from the filling tube while being filled by the feeding pressure.

US 4,306,334 A1 describes a rotatable holder having a plurality of parallel carriers onto which sausage casings are gathered. The holder rotates to dip the casings sequentially in a treating liquid after which the carriers and casings emerge. When a carrier is aligned with a filling tube of a sausage-filling machine, the casing is transferred still in gathered condition from said carrier to said tube. Means are provided to hold the casing in place and to facilitate start up of filling of a new casing.

The tubular-shaped packaging casing is made of a thin sheet material and is stored on the filling tube in a shirred form. Thus, a long sausage-shaped product can be produced, wherein the packaging casing takes up a little space on the filling tube. But the packaging casing has a limited length, so a new packaging casing must be provided at regular time intervals. Further, different packaging casings must be provided depending on the sausage-shaped product, wherein a coarse or thick sausage requires large packaging casings, and a delicate or thin sausage requires small packaging casings. It is known to provide a plurality of packaging casings in a storage nearby a production system for producing a sausage-shaped product, wherein an operator manually and very carefully picks up each packaging casing and pushes over the filling tube. The packaging casing is difficult to handle due to its mechanical properties and the way it is stored in the storage.

Since clipping machines can have high cycle rates, it may be necessary for an operator to be constantly in front of the clipping machine to push new packaging casings onto the filling tube. Despite the high level of automation of a filling/clipping machine combination, this approach does not help to make the production process efficient. In addition, the operator's activity is monotonous and is thus physically and mentally stressful.

Thus, it is an object of the present invention to create a possibility that the production process is efficient and the burden for an operator is reduced.

The claimed invention is defined in independent claim 1 and relates to a magazine for providing at least one tubular-shaped packaging casing suitable for receiving a flowable filling material in the production of sausage-shaped products. Preferred configurations of the claimed invention are defined in dependent claims 2 to 11. The invention further relates to a revolver having at least two such magazines and to a production machine having such a magazine and/or revolver.

According to the present invention, there is provided an inventive magazine for supplying or providing at least one tubular-shaped packaging casing, wherein the magazine comprises a longitudinal magazine axis. The magazine further comprises at least one mandrel or rod for holding at least one packaging casing, wherein the at least one mandrel has a longitudinal mandrel axis, which extends at least approximately parallel to the longitudinal magazine axis, and wherein the at least one mandrel comprises a free end at a first mandrel end. The at least one mandrel or rod may be a tubular shaft or a solid bar. The at least one packaging casing may be removed from the at least one mandrel by a relative movement regarding the mandrel axis over the free end of the at least on mandrel. The tubular-shaped packaging casing is folded like a concertina and is provided at its end facing in the direction of the free end of the mandrel with at least one closure means, like a closure clip.

The magazine further comprises at least one retaining element at the proximity of the first mandrel end for releasably retaining the packaging casing on the at least one mandrel. Consequently, the at least one packaging casing remains in a suitable arrangement, so a secure and repeated removal is enabled.

Due to the consistent storage of the packaging casing, the process of removal can be automated, in particular with a picking robot. It is conceivable that, alternatively, the at least one mandrel is provided for holding at least one carrying tube along with at least one packaging casing stored on the carrying tube. In the further description, reference is made only to the tubular-shaped packaging casing, whereas the contents may also apply to the embodiment as to the carrying tubes each carrying one tubular-shaped packaging casing.

In a preferred embodiment of the inventive magazine, the longitudinal magazine axis is oriented at least approximately vertically. The magazine may be arranged at the top of a table. Vertical means perpendicular to the hall floor on which the magazine or the table may be installed and/or in the direction of the earth's gravity. Thus, a packaging casing that is stored rests radially evenly on the mandrel. A horizontal arrangement can cause an irregular, one-sided arrangement of the packaging casing on the filling tube due to the earth's gravity, by which the packaging casing could be damaged or difficult to pick up.

Preferably, the at least one retaining element has at least one first section or position in which it releases the free end of the at least one mandrel and at least one second section or position in which the free end of the at least one mandrel is capped by the at least one retaining element. The at least one first section or position may be in extension of the mandrel axis at the free end of the at least one packaging casing and/or at least one mandrel. In the at least one first section or position the at least one retaining element may at least partially cover the free face end of the at least one packaging casing and/or the at least one mandrel, preferably half covered or covered by one third. Additionally or alternatively, the at least one first section or position may be at a circumference of the at least one packaging casing or the at least one mandrel. The at least one second section or position may be spaced apart from the first section or position along the mandrel axis.

Additionally or alternatively, the at least one second position may be perpendicularly spaced apart from the mandrel axis, wherein the second position has a smaller or larger distance or the same distance to the magazine axis as the first position. The movement of the at least one retaining element between the at least one first position and the at least one second position may be executed manually or automated. An operator may urge the at least one retaining element from the at least one first position in the at least one second position, and vice versa. It may be advantageous if the operator urges the at least one retaining element from the first position in the second position by removing the at least one packaging casing from the at least one mandrel.

It is conceivable that the removement of the packaging casing comes along with the movement of the at least one retaining element from the first position in the second position. The at least one retaining element may also be driven by a means of a motor, wherein the means of a motor moves the at least one retaining element between the retaining position and the releasing position. The at least one retaining element may be moved from the first position in the second position at the same time the packaging casing is picked up and begins to move.

The movement of the retaining element can also be caused by the movement of the magazine, for example when the magazine rotates about its longitudinal magazine axis and corresponding, preferably controllable, stops move the retaining element from the first position to the second position and after the pick-up of the tubular-shaped packaging casing from the second position to the first position as the magazine rotates.

In a further preferred embodiment, the at least one retaining element is made of a material which is elastic or flexible at least in sections, preferably the at least one retaining element comprises a rigid fastening portion and a flexible lip. Thus, the at least one retaining element may be reversibly movable between the first position and the second position.

The at least one retaining element may be configured in such a way, that the retaining element urges by its own in the first position and must be moved in the second position using external energy or vice versa.

The at least one retaining element may comprise a material that is suitable for a plurality of reversible deformations, like rubber or elastomers.

It is advantageous if the at least one retaining element comprises a retaining surface, wherein in the first position the retaining surface extends perpendicular to the mandrel axis and engages, preferably completely, with the free end of the at least one mandrel and/or an end face of the packaging casing. In the second position the retaining surface may further be perpendicular to the mandrel axis or may be curved around an axis perpendicular to the mandrel axis to release the at least one packaging casing. Alternatively, the at least one retaining element may be translationally moved perpendicular to the mandrel axis between the first position and the second position.

In a preferred embodiment the at least one mandrel has a second mandrel end spaced apart from the first mandrel end along the mandrel axis. The mandrel is releasably or non-releasably attached to mandrel carrier means at the second mandrel end.

The mandrel carrier means may comprise a first plate, wherein the first plate is preferably perpendicular to the magazine axis. The first plate may be circular and flat regarding to the magazine axis. A packaging casing may rest against the mandrel carrier means in the stored state. Thus, the packaging casing is stored at the mandrel securely and consistently.

Preferably, the mandrel carrier means is rotatable around the longitudinal magazine axis. Thus, an empty mandrel or a packaging casing can be suitably positioned in such a way, that an operator can easily store a new packaging casing at an empty mandrel or pick a packaging casing. The mandrel carrier means may comprise first driven means to rotate the mandrel carrier means, in particular the first plate.

The mandrel carrier means may further comprise first gear means to gear the first driven means. The first driven means and/or the first gear means may be arranged below the first plate. Due to the rotation of the mandrel carrier means different packaging casing may be positioned at a same picking position and/or a packaging casing to be picked may be positioned at different picking positions. Thus, packaging casing may be provided at the same picking position, so they can be picked easily, securely, and repeatedly.

It is conceivable that at least one first sensor is provided to detect if the at least one mandrel comprises at least one packaging casing. Thus, depending on the sensor signal of the first signal a suitable mandrel can be positioned in the picking position.

In a preferred embodiment the at least one retaining element is held by holding means coupled releasably or non-releasably by a shaft to the mandrel carrier means for supporting the holding means and transmitting forces from the mandrel carrier means to the holding means, in particular a rotation around the magazine axis. The holding means may be arranged above the mandrel carrier means and/or the shaft may be arranged between the mandrel carrier means and the holding means. The shaft may be tubular or solid and extend along the magazine axis. The holding means may comprise a second plate. The second plate may be circular and/or flat regarding the magazine axis and/or perpendicular to the magazine axis. The second plate may further be parallel to the first plate and spaced apart from the first plate along the magazine axis. The distance between the mandrel carrier means and the holding means may be adjustable, wherein, preferably, the shaft can be telescopic.

Additionally, the at least one mandrel may also be adjustable in the axial length according to the mandrel axis. Thus, packaging casing with different lengths may be stored in the magazine.

It is advantageous if the at least one retaining element is arranged at the outer circumference of the holding means. Thus, the holding means stand back and just the at least one retaining element is protruding perpendicular to the magazine axis to cap the packing casing stored on the at least one mandrel.

Preferably, the holding means comprise at least one tooth extending perpendicular to the magazine axis and the at least one retaining element is arranged at the at least one tooth.

It is advantageous if mandrel carrier means have an outer first diameter, and the holding means have an outer second diameter. The first diameter may be larger than the second diameter. Thus, the at least one mandrel may be arranged at the mandrel carrier means while packaging casing can be easily picked from and arranged at the at least one mandrel. The quotient between the first diameter and the second diameter may be in range between 10:1 and 1.2:1, in particular in a range between 5:1 and 1.5:1 and preferably about 2:1. Thus, a movement of a packaging casing along the mandrel axis over the free end of the at least one mandrel can be realized.

Preferably, the at least one mandrel is arranged at the mandrel carrier means along a shape of a circular ring, wherein the ring is arranged perpendicular to the magazine axis. Thus, the at least one mandrel has a constant distance to the magazine axis, and an easy handling of the packaging casing is possible even with a rotation of the magazine, in particular with a rotation of the mandrel carrier means.

It is advantageous if the circular ring has a ring diameter, wherein the first diameter is larger than the ring diameter and/or wherein the ring diameter is larger than the second diameter. The quotient between the first diameter and the ring diameter may be in range between 2:1 and 1.1:1, and preferably about 1.2:1. The quotient between the ring diameter and the second diameter may be in range between 8:1 and 1.3:1, in particular between 4:1 and 1.6:1 and preferably about 1.8:1.

In a preferred embodiment, the at least one mandrel comprises at least one support element for supporting the packaging casing stored at the at least one mandrel. The packaging casing may rest against the at least one support element due to earth's gravity. The at least one mandrel may comprise a mandrel rod. The at least one support element may be arranged at the mandrel rod. The at least one support element may be formed as a mandrel collar, wherein the mandrel collar has a larger cross-section than the mandrel rod regarding the mandrel axis.

The at least one support element is preferably reversibly adjustable in its position along the mandrel, in particular along the mandrel rod. Thus, packaging casings with different lengths may be stored in the magazine. To adjust the position of the at least one support element along the mandrel axis, the at least one mandrel may comprise a rack and a gear wheel engaging with the rack or a threaded spindle and a nut engaging with the threaded spindle.

The present invention further relates to a revolver comprising at least two magazines for providing at least one tubular or bag-shaped packaging casing suitable for receiving a flowable filling material in the production of sausage-shaped products, in particular sausages. The revolver comprises revolver carrier means, wherein the at least two magazines are arranged on the revolver carrier means. The revolver carrier means are rotatable around an axis of rotation extending at least approximately parallel to the longitudinal magazine axis. A rotation of the revolver carrier means causes a rotation of the at least two magazines. Thus, a higher flexibility of the magazines is enabled.

The revolver carrier means may comprise second driven means to rotate the mandrel carrier means, in particular the at least two magazines. The revolver carrier means may further comprise second gear means to gear the second driven means. If the revolver carrier means comprise a second driven means and/or a second gear means then the at least two magazines, in particular the mandrel carrier means, may not have a separate first driven means and/or second driven means. So, the second driven means and/or the second gear means may be suitable to rotate the revolver carrier means and the mandrel carrier means simultaneously and/or independently.

The revolver carrier means may comprise a third plate. The third plate may be circular and/or flat regarding the magazine axis and/or perpendicular to the magazine axis. The third plate may further be parallel to the first plate and/or the second plate. The third plate may be spaced apart from the first plate and/or the second plate along the magazine axis. The first plate may be arranged between the second plate and the third plate. The third plate has a third diameter, wherein the third diameter is greater than the first diameter and/or the second diameter and/or the ring diameter. The quotient between the third diameter and the first diameter may be in range between 10:1 and 1.2:1, in particular between 5:1 and 1.5:1 and preferably around 2.5:1. The quotient between the third diameter and the second diameter may be in range between 20:1 and 2:1, in particular between 15:1 and 3:1 and preferably around 4:1.

It is conceivable that at least one second sensor is provided to detect if the at least one mandrel comprises at least one packaging casing. Otherwise, the revolver carrier means can be rotated in such a way that a further equipped magazine is positioned in the workspace of the operator.

In a preferred embodiment, the revolver carrier means have at least a first position in which at least a first magazine is arranged in a delivery position and at least a second position in which at least a second magazine is arranged in a feeding position. In the first position, the operator or an automatic device for picking-up the packaging casing, like a robot, may pick up a packaging casing stored at the least one mandrel. In the second position, the operator may refill the at least one empty mandrel with new packaging casing.

It is advantageous if the revolver comprises at least one separating wall arranged between the first position and the second position. Thus, a first operator can work at the at least one first magazine and a second operator can work at the at least one second magazine, wherein the at least one separating wall provides an interfering between the first operator and the second operator. The first operator may be a robot and the second operator may be a human. In this case, a human-robot-collaboration may be possible, wherein the direct contact of both operators is prevented. This goes hand in hand with a high level of safety and high productivity. The separating wall may be formed by a solid wall that can be rotationally or translationally opened and closed by a human or a robot. Alternatively, the separating wall may be a flexible sheet that can be urged by the revolver, in particular by the rotated magazines.

Preferably, the one or more mandrels of the magazine are movable from a loading position to a delivery position, preferably individually in succession or together or in groups. In the loading position, a packaging casing may be loaded onto the mandrel and/or in the delivery position, a packaging casing can be removed from a mandrel. Preferably, the mandrels are rotatable about the magazine axis for moving the mandrels from the loading position to the delivery position.

A packaging casing may be manually and/or automatically loaded onto a corresponding mandrel in the loading position. For example, an operator can lift the retaining element and manually load a packaging casing onto the corresponding mandrel being arranged in the loading position. The loading position may be arranged in or form a loading section of the magazine. The loading section is a section of the magazine configured for loading packaging casings on the at least one mandrel. Preferably, the magazine comprises two, three or more mandrels. A magazine comprising a plurality of mandrels may comprise multiple loading positions arranged in a single or multiple loading sections. Through this multiple mandrels may be loaded with new packaging casings at the same time.

The delivery position may also be referred to as pick-up position, take-up position or provision position. When a mandrel is in the delivery position, a packaging casing can be removed therefrom and be provided, for example, to a filling tube of a clipping machine. Preferably, removal of the packaging casing from the mandrel and/or loading of the packaging casing from the magazine to the filling tube respectively is performed by a robot. The magazine allows for automated loading of packaging casings to a clipping machine. The delivery position is preferably arranged in or forms a delivery section of the magazine. The delivery section may comprise multiple delivery positions. The delivery section and the loading section can be separated by a wall.

The magazine comprises a pre-treatment device for pre-treating a packaging casing held on a mandrel. The pre-treatment device is configured to pre-treat or prepare packaging casings for filling with filling material. Pre-treatment can involve provision of a substance to the packaging casing, cutting operations or other mechanical operations such as compression operations or the like.

In a preferred further development a pre-treatment section, preferably comprising the pre-treatment device, is arranged between a loading position and a delivery position of the magazine with respect to a moving direction of the at least one mandrel from the loading position to the delivery position. The pre-treatment section may comprise a pre-treatment position. The pre-treatment section can be a moistening section having a moistening position. It shall be understood, that the pre-treatment section must not comprise a pre-treatment position. For example and preferably, pre-treatment of a packaging casing stored on a mandrel is continuously performed while the mandrel holding the respective packaging casing is moved through the pre-treatment section. In other embodiments, a packaging casing stored on the at least one mandrel is pretreated while the mandrel is stationary in the pre-treatment position.

The pre-treatment device is or comprises a moistening device. The moistening device is configured to provide a moistening substance, in particular water, brine or other suitable substances, in form of a liquid and/or a moistening mist and/or a gas to a packaging casing held on the mandrel. The moistening mist may be generated from the moistening liquid. Preferably, the moistening device is configured to provide the moistening liquid and/or the moistening mist to a packaging casing held on a mandrel that is arranged in the pre-treatment section, in particular at the pre-treatment position. Preferably, the moistening device is configured for external moistening and/or internal moistening of a packaging casing arranged on a mandrel. During external moistening, moistening substance in form of a liquid and/or a mist is provided to a surface of the packaging casing oriented away from the mandrel it is arranged on. During internal moistening, the moistening substance is provided to an internal surface of the respective packaging casing oriented towards the mandrel it is arranged on. For the example of a tubular packaging casing, moistening substance is provided to an inner tubular surface during internal moistening and to an opposite outer tubular surface during external moistening. It shall be understood, that the moistening device may be configured to moisten the inside as well as the outside of a packaging casing arranged on a mandrel.

Preferably, the at least one mandrel comprises an inner channel and at least one opening or perforation extending from the inner channel to an outer mandrel surface on which a packaging casing can be arranged. For providing the inner channel with the moistening substance, the moistening device can comprise a fluid coupling, wherein the fluid coupling is configured to couple to the at least one mandrel for providing the moistening substance to the inner channel of the mandrel, preferably when the mandrel is arranged at a pre-treatment position of the pre-treatment section. The preferred embodiment allows for internal moistening of packaging casings each held on a mandrel. The coupling must not directly couple to the mandrel, but may also couple to an intermediate element, such as a mandrel carrier means, for providing the moistening substance to the inner or internal fluid channel of the mandrel.

Preferably, the opening comprises at least one through-hole or hole extending from the inner channel to an outer mandrel surface. When a packaging casing is held on the respective mandrel, the outer mandrel surface is oriented towards an inner surface of the packaging casing. The through-hole of the opening allows moistening substance to pass through a mandrel wall from the inner channel towards the outer mandrel surface.

The opening preferably comprises a plurality of holes. The holes are preferably evenly spaced with respect to a circumferential direction of the mandrel around the longitudinal mandrel axis. The holes are preferably evenly spaced with respect to the longitudinal mandrel axis. The holes may also be unevenly spaced. For example and preferably, the number of holes per surface area of the outer mandrel surface may increase or decrease towards the first mandrel end. The size of the holes may vary or all holes may have the same size or diameter respectively. Preferably, the hole or holes extend in a radial direction from the inner fluid channel towards the outer mandrel surface. In other embodiments, one or more of the holes, in particular on the first mandrel end, may extend at an angle to the longitudinal mandrel axis different to 90°.

A moistening substance can be provided to a mandrel in the pre-treatment position via the coupling. The moistening substance is then provided to an inner surface of the packaging casing via the inner channel and the perforated mandrel wall. A packaging casing stored on the mandrel is then moistened or soaked with the moistening substance provided, preferably under pressure, via the coupling. Through this, moistening substance is used very efficiently and spillage of moistening liquid is reduced.

Alternatively or additionally, the moistening device is configured to provide a curtain or screen of moistening substance. The magazine carries means can move a mandrel holding a packaging casing through the screen of moistening substance for pre-treating the packaging casing. For providing the screen of moistening substance, the moistening device may comprise a pump, a moistening substance tank and a screen nozzle. For example, the screen nozzle can be a pipe having a slot.

The moistening device comprises one or more spray nozzles for spraying moistening substance in form of a liquid and/or a moistening mist onto a packaging casing, preferably a packaging casing held on a mandrel arranged in the pre-treatment section. Preferably, the moistening device comprises at least two spray nozzles, preferably arranged opposing each other so that a packaging casing received in the pre-treatment section, in particular in the pre-treatment position, can be sprayed with moistening substance from at least two opposite sides.

Preferably, the moistening or wetting device comprises one or more shells. The one or more shells are configured to be put over a mandrel and a packaging casing held thereon. The moistening device can be configured to position the one or more shells around a mandrel holding a packaging casing. The shells can be configured to provide a moistening substance in form of a liquid and/or a moistening mist to a packaging casing received in the shells and/or to capture moistening substance. For example, the shell can be a hollow tube that can be put over the mandrel. Moistening substance can then be provided to the packaging casing stored on the mandrel received in the shell, preferably via one or more spray nozzles and/or one or more fluid or mist outlets of the shell.

Preferably, the moistening device comprises two or more shells. The shells can be separated from each other along a plane parallel to the longitudinal mandrel axis so that each shell is configured to cover a circumferential section of a mandrel or a packaging casing stored on the mandrel respectively. The shells can be configured to each cover a circumferential section of 90° or more, 100° or more, 110° or more, 120° or more, 130° or more, 140° or more, 150° or more, 160° or more, preferably 170° or more of a mandrel in the pre-treatment section.

In other embodiments, the moistening device can be configured to dip the at least one mandrel arranged in the pre-treatment section into a bath of moistening liquid. Preferably, the at least one mandrel is configured to tilt from a conveying orientation to a dipping orientation. For example, the longitudinal mandrel axis can be substantially vertical in a movement orientation in which the mandrel is moved from the loading position to the pre-treatment position. Once in the pre-treatment position or during movement through the pre-treatment section, the mandrel can be tilted so that a packaging casing stored on the mandrel is dipped into a bath of moistening liquid. During dipping, the longitudinal mandrel axis can be substantially horizontal or the mandrel axis can be negatively inclined so that the first mandrel end is below an opposite second mandrel end. After dipping, the mandrel can be tilted back to the upright or vertical orientation of the longitudinal mandrel axis, in particular for moving the at least one mandrel from the pre-treatment position to the delivery position.

Preferably, the magazine further comprises a recuperation tank at least partially positioned below the pre-treatment section, in particular below the pre-treatment position, for capturing excessive moistening substance. The recuperation tank preferably is an open container. The recuperation tank may be coupled to a treatment device that is configured for cleaning recuperated moistening substance. The recuperation tank is preferably connected to the moistening device or forms a supply of moistening substance for the moistening device respectively.

Preferably, the pre-treatment section of the magazine is at least partially enclosed by a housing. A housing prevents moistening substances used for pre-treating packaging casings from contamination or from contaminating other components of the magazine or devices arranged in the vicinity of the magazine. Preferably, the pre-treatment section of the magazine is separated from the loading position and/or loading section by a first separation wall. A second separation wall may be provided between the pre-treatment section and the delivery position and/or delivery section. Preferably, both the first separation wall and the second separation wall are provided.

In particular, when only a single magazine rotatable about its magazine axis is used, the pre-treatment section, may be a sector of a circle. If the magazine is a drum magazine having a circular foot print, the pre-treatment section may for example be a quarter or third sector of a circle.

The present invention further relates to a production machine, in particular a clipping machine, for filling and closing a tubular-shaped packaging casing to produce sausage-shaped products, in particular sausages. The production machine comprises at least one magazine and/or a revolver. The production machine comprises further a robot to pick-up a packaging casing provided at the magazine and/or at the revolver and to place it at a filling unit or filling machine.

The filling unit may comprise multiple filling tubes to receive multiple packaging casings, wherein an active filling tube is rotated in an active or operating position and wherein at least one passive filling tube is rotated in a passive or non-operating position. Preferably in the passive position, the filling tubes can be exchangeable by the operator and new tubular-shaped packaging casings can be pushed onto the one or more filling tubes located in their passive positions. To close the packaging casing filled with filling material by a closure means the production machine further comprises a clamping device. It is conceivable that one magazine or one revolver is used for multiple operators and/or clamping devices and/or production lines.

In an embodiment not forming part of the present invention, there is further disclosed a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube, each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°.

Preferably, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit.

Preferably, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

Preferably, the first casing brake holder unit includes a telescopic guidance and a telescopic drive for extending and retracting telescopic guidance, and the second casing brake holder unit includes a telescopic guidance and a telescopic drive for extending and retracting telescopic guidance.

Preferably, the telescopic drives are linear drives, particularly, piston/cylinder drives.

Preferably, the filling tube assembly further comprises a first pivot drive unit, which is provided for pivoting the first casing brake assembly relative to the first filling tube about a pivot point at which the first casing brake assembly is coupled to the revolver plate, and the filling tube assembly further comprises a second pivot drive unit, which is provided for pivoting the second casing brake assembly relative to the second filling tube about a pivot point at which the second casing brake assembly is coupled to the revolver plate.

Preferably, the filling tube assembly is mounted on a framework via a joint portion.

Preferably, the joint portion is mounted on a side wall of the framework.

Preferably, the filling tube assembly is linearly and/or rotatably shiftable such that the filling tube is positioned in front of the clipping machine.

Preferably, a feeding socket is fixed to the revolver plate and facing away from the clipping machine, wherein feeding socket is coaxially aligned with the central axis of the filling tube.

Preferably, the revolver carrier means further have a pre-treatment position between the first position and the second position with respect to a movement direction from the first position to the second position, and wherein the revolver comprises a pre-treatment device for pre-treating packaging casings held on mandrels of a magazine arranged in the pre-treatment position.

A revolver comprising at least two magazines may comprise a loading section and a delivery section. Additionally, the revolver can comprises a pre-treatment section. Preferably, the revolver comprises more than two magazines, in particular three magazines. At least one magazine may then be arranged in the pre-treatment section while at least one magazine is arranged in the loading section and at least one is arranged in the delivery section. A magazine may be moved from the loading section to the pre-treatment section by rotating the revolver about the revolvers axis of rotation. After treatment of the packaging casings of the respective magazine, the magazine is moved from the pre-treatment section to the delivery section by further rotation of the revolver about its axis of rotation. Preferably, a magazine arranged in the pre-treatment section is rotatable about its magazine axis. During rotation of the magazine in the pre-treating section, the revolver itself is preferably stationary. By rotating the magazine, all packaging casings held on the mandrels of the respective magazine can be pre-treated with a single moistening device and/or the packaging casings are pre-treated more uniformly. For example, the mandrels of the magazine and the packaging casings stored thereon may be rotated past spray nozzles of a moistening arranged in the pre-treatment section of the revolver.

In an embodiment not forming part of the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly as mentioned above, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

Preferably, the robotic device includes: a gripper unit for gripping a tubular packaging casing supply provided by the storage device, and for transferring said tubular packaging casing supply onto the at least first filling tube of the clipping machine; and a control unit for controlling at least the gripper unit.

Preferably, the storage device includes: at least a first storage assembly in which at least one tubular packaging casing supply is provided for being transferred by the robotic device onto the at least first filling tube of the clipping machine. Preferably, the first filling tube is movable between a filling position, in which filling material is fed through the first filling tube into the tubular packaging casing stored on the first filling tube, and a refill position, in which a tubular packaging casing supply is transferred onto the first filling tube.

In an embodiment not forming part of the present invention, there is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

In an embodiment not forming part of the present invention, there is further disclosed a gripping device for picking up, conveying and delivering a casing tube such as a casing tube of a sausage, the gripping device comprising: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members. Preferably, the drive means are driven pneumatically, and wherein the drive means are supplied by means of a compressed air supply via a common valve and respective conduits.

Preferably, the conduits from the common valve to the respective drive means are substantially of the same length.

Preferably, a respective flow restrictor is connected to the drive means for compensating unsynchronized movements during opening and closing of the gripper members by the drive means.

Preferably, at least one of the gripper members is translatory and/or rotatory movable with respect to the base structure.

Preferably, each of the gripper members is guided by at least two guide rods. Preferably, at least one of the gripper members comprises a detection means which is capable of detecting the contact of the casing tube, wherein preferably two opposing gripper members comprise each a detection means.

Preferably, the drive means are connected to the gripper members via at least one connecting bracket having preferably a curved shape.

Preferably, the base structure and/or the at least two gripper members comprise a plurality of through holes and oblong holes for reducing the weight of the gripping device.

In an embodiment not forming part of the present invention, there is further disclosed a system for picking up, conveying and delivering a casing tube such as a casing tube of a sausage, the system comprising: a delivering bar on which the respective casing tube is stored, a receiving bar on which the respective casing tube is to be inserted, and a transporting apparatus including a handling device and a gripping device as mentioned above for conveying the casing tube from the delivering bar on the receiving bar.

Preferably, the system further comprises at least one magazine including a plurality of delivering bars, wherein the at least one magazine is mounted on a framework, wherein preferably two magazines are arranged on the framework opposite to each other.

Preferably, the framework is rotatable and configured to rotate the at least one magazine in a picking up position and a loading position, respectively. Preferably, the at least one magazine comprises a plurality of substantially vertical delivering bars, wherein preferably the delivering bars are arranged in a circle with a predefined distance to each other.

Preferably, the at least one magazine is rotatable and configured to rotate one of the delivering bars in the picking up position.

Preferably, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine.

In an embodiment not forming part of the present invention, there is further disclosed a magazine for providing at least one tubular-shaped packaging casing suitable for receiving a flowable filling material in the production of sausage-shaped products, in particular sausages, comprising: at least one mandrel for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position.

Preferably, at least one retaining element is provided wherein the retaining element is arranged at least at the proximity of the first mandrel end for releasably retaining the packaging casing on the at least one mandrel.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the longitudinal mandrel axis is oriented at least approximately vertically or forms an acute angle with the vertical line.

Preferably, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer.

Preferably, the at least one mandrel comprises at least one support element for supporting the packaging casing, the at least one support element is preferably reversibly adjustable in its position along the mandrel.

Preferably, the conveyor is inclined in its longitudinal axis.

Preferably, the at least one retaining element is held by holding means coupled by a shaft to the mandrel carrier means for supporting the holding means and transmitting forces from the mandrel carrier means to the holding means.

Preferably, the carrier means are holding the mandrel, the shaft and the holding means.

In an embodiment not forming part of the present invention, there is further disclosed a production system, in particular a clipping machine, for filling and closing a tubular or bag-shaped packaging casing to produce sausage-shaped products, in particular sausages, comprising: at least one magazine as mentioned above, and a robot to pick-up a packaging casing provided at the magazine and to place it at a filling unit.

Preferably, the loading position and the delivery position of the conveyor is separated by a separating wall, wherein the separating wall includes at least one window for passing the conveyor including the at least one mandrel.

Preferably, the separating wall includes at least one sensor to monitor the at least one window of the separating wall for unexpected movements such as a hand of an operator.

Preferably, the at least one sensor is switched off while a mandrel is passing the window of the separating wall.

In an embodiment not forming part of the present invention, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided preferably with at least a first filling tube and preferably a second filling tube and a first and preferably a second casing brake assembly, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a first gripper unit for gripping a tubular packaging casing supply and a second gripper unit for gripping the first casing brake assembly, the method comprises the steps of: removing the casing brake assembly from the filling tube by the second gripper unit; moving the robotic device into a take-up position for taking up by the first gripper unit a tubular packaging casing supply provided in a storage device; gripping the tubular packaging casing supply provided in a storage device by the first gripper unit; moving the robotic device from the take-up position toward the filling tube; transferring the tubular packaging casing supply onto the filling tube by the first gripper unit; releasing the tubular packaging casing supply onto the filling tube of the clipping machine by the first gripper unit, and positioning the casing brake assembly on the filling tube by the second gripper unit.

Preferably, the method further comprises the step of exchanging a first gripper unit of robotic device, for gripping a tubular packaging casing supply by a second gripper unit for gripping the at least first casing brake assembly, for reversibly removing the first casing brake assembly from the at least first filling tube.

Preferably, the method further comprises the step of securing the tubular packaging casing supply on the first filling tube by at least one retainer device.

Preferably, the robotic device includes at least a first sensor unit associated with the first gripper unit, for detecting the position of the gripper unit relative to the tubular packaging casing supply in the storage device and/or for detecting the position of the gripper unit relative to the filling tube.

Preferably, the first gripper unit at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the first gripper unit along a predefined moving path towards the filling tube of the clipping machine.

Preferably, the method further comprises the step of positioning the first gripper unit with its gripping axis coaxially to the central axis of the filling tube and in front of the filling tube; and shifting the tubular packaging casing supply onto the filling tube by the first gripper unit.

Preferably, the method further comprises the step of detecting by the first sensor unit the position of the tubular packaging casing supply on the filling tube; and releasing the tubular packaging casing supply onto the filling tube.

Preferably, the robotic device is activated upon a signal indicating a specific condition of the clipping machine.

Preferably, the robotic device is deactivated upon a signal indicating a specific condition of the clipping machine and/or a specific condition of the storage device. Preferably, the clipping machine includes a first filling tube and at least a second filling tube, with one filling tube being arranged in a filling position in which filling material may be fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the first gripper unit includes at least one further sensor unit for detecting the position of the gripper elements.

In an embodiment not forming part of the present invention, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least at least a first filling tube and preferably a second filling tube onto each of which a packaging casing supply can be applied; a robotic device for transferring a packaging casing supply from the storage device onto a filling tube of the clipping machine, and having at least a first griper unit for gripping a tubular packaging casing supply, and a second gripper unit for gripping a casing brake assembly of the clipping machine; and a control unit for at least partially controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

In an embodiment not forming part of the present invention, there is further disclosed a robotic device including a gripper unit and arranged in a system for producing sausage-shaped products as mentioned above and controlled by the method as mentioned above.

In an embodiment not forming part of the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

In an embodiment not forming part of the present invention, there is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube. Preferably, the method further comprises the step of suspending the sausage-shaped product discharged by the discharge device on a rod-like element provided by the hanging line, wherein, preferably, the clipping machine controls at least partially the robotic device and/or the hanging line.

In an embodiment not forming part of the present invention, there is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a gripper unit for gripping a tubular packaging casing supply, the method comprises the steps of: moving the robotic device into a take-up position for taking up by the gripper unit a tubular packaging casing supply provided in a storage device; gripping the tubular packaging casing supply provided in a storage device by the gripper unit; moving the robotic device from the take-up position toward the filling tube; transferring the tubular packaging casing supply onto the filling tube by the gripper unit; and releasing the tubular packaging casing supply onto the filling tube of the clipping machine by the gripper unit.

Preferably, the robotic device includes at least a first sensor unit associated with the gripper unit, for detecting the position of the gripper unit relative to the tubular packaging casing supply in the storage device and/or for detecting the position of the gripper unit relative to the filling tube.

Preferably, the gripper unit includes at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the gripper unit along a predefined moving path towards the filling tube of the clipping machine.

Preferably, the method further comprises the step of position the gripper unit with its gripping axis coaxially to the central axis of the filling tube and in front of the filling tube; and shifting the tubular packaging casing supply onto the filling tube by the gripper unit.

Preferably, the method further comprises the step of detecting by the first sensor unit the position of the tubular packaging casing supply on the filling tube; and releasing the tubular packaging casing supply onto the filling tube.

Preferably, filling tube of the clipping machine is provided with a casing brake assembly, the method further comprises the step of: positioning the casing brake assembly in front of the filling tube after the tubular packaging casing supply has been shifted onto the filling tube and prior the tubular packaging casing supply has been released onto the filling tube by the gripper unit.

Preferably, the robotic device is activated upon a signal indicating a specific condition of the clipping machine.

Preferably, the robotic device is deactivated upon a signal indicating a specific condition of the clipping machine and/or a specific condition of the storage device. Preferably, the clipping machine includes a first filling tube and at least a second filling tube, with one filling tube being arranged in a filling position in which filling material is fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the gripper unit includes at least one further sensor unit for detecting the position of the gripper elements.

In an embodiment not forming part of the present invention, there is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least two filling tubes onto each of which a packaging casing supply can be applied; a robotic device for transferring a packaging casing supply from the storage device onto a filling tube of the clipping machine; and a control unit for controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

In an embodiment not forming part of the present invention, there is further disclosed a robotic device including a gripper unit and arranged in a system for producing sausage-shaped products as mentioned above and controlled by the method as mentioned above.

In an embodiment not forming part of the present invention, there is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit. Preferably, the storage device includes at least a third sensor unit for detecting the presence or absence of a tubular packaging casing supply in the storage device. Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

In an embodiment not forming part of the present invention, there is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

For a more complete understanding of the invention, the invention will now be described in detail with reference to the accompanying drawings. The detailed description will illustrate and describe what is considered as preferred embodiments of the invention. It should of course be understood that various modifications and changes in form or detail could readily be made without departing from the scope of the invention as defined in the appended claims.

It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" or "including" does not exclude other elements or steps. The word "a" or "an" does not exclude the plurality. The wording "at least one" items comprising also the number 1, i.e. a single item, and further numbers like 2, 3, 4 and so forth. The word "about" includes a deviation of ± 5% of the total.

In the accompanying drawings:
- Fig. 1: shows a front view of a clipping machine comprising a magazine according to the present invention;
- Fig. 2: shows a rear view of the clipping machine according to Fig. 1;
- Fig. 3: shows a top view of the clipping machine according to Fig. 1;
- Fig. 4a: shows a schematical side view of a mandrel and a retaining element of the magazine according to Fig. 1, wherein the retaining element is in a retaining position;
- Fig. 4b: shows a schematical side view of a mandrel and a retaining element of the magazine according to Fig. 1, wherein the retaining element is in a releasing position;
- Fig. 5: shows a side view of a clipping machine comprising a revolver according to the present invention;
- Fig. 6: shows a top view of the clipping machine according to Fig. 5;
- Fig. 7: shows a top view of a clipping machine similar to the clipping machine of Fig. 1, wherein the magazine comprises a pre-treatment section;
- Fig. 8a: shows a schematical side view of a mandrel holding a packaging material and a moistening device comprising two shells, wherein the shells are in an open position; and
- Fig. 8b: shows a schematical side view similar to the side view of Fig. 5a, wherein the shells are closed over the mandrel.

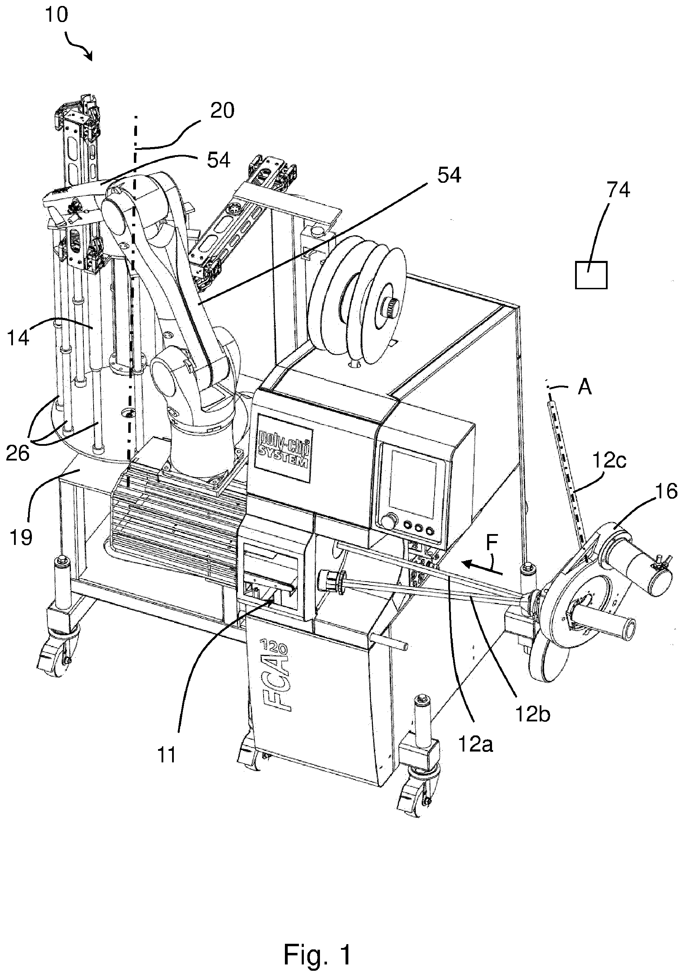

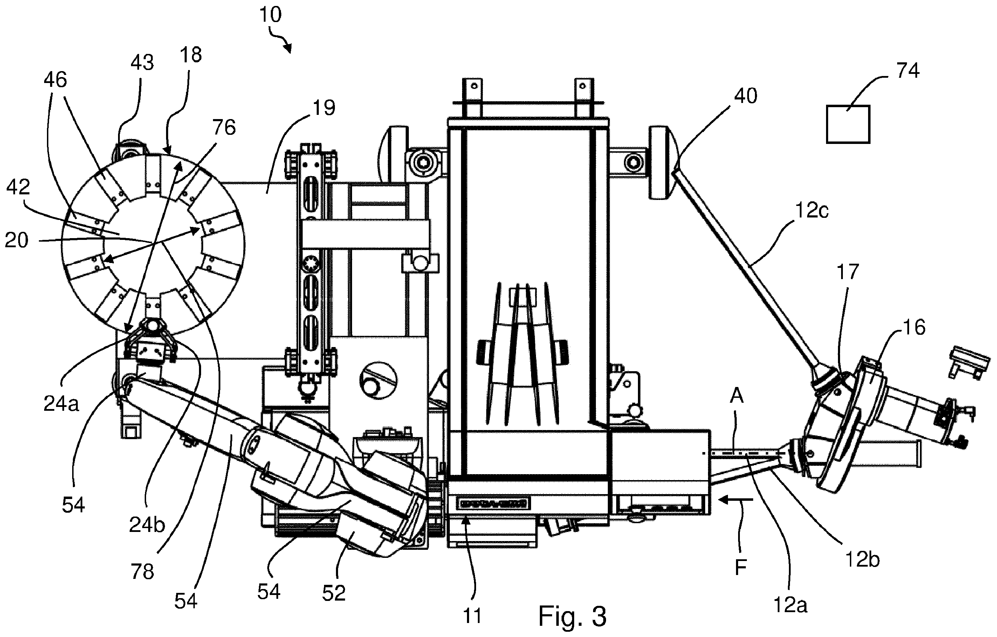

In Figs. 1 to 3, a first embodiment of a production machine, in particular a clipping machine 10 for preferably continuously producing sausage-shaped products, in particular sausages, is shown. A filling tube 12a is arranged upstream of clipping machine 10 with respect to a feeding direction F, wherein filling tube 12a extending along a central axis A and being made of a suitable material, like stainless steel.

Filling tube 12a arranged in an active or operating position which is a filling position, is attached to a filling tube assembly 16 which holds several filling tubes 12, in the shown embodiment in total two filling tubes 12a, 12c. In the embodiment shown in Fig. 1, filling tubes 12b, 12c are each in a passive position or non-working position, in which they can be loaded with new tubular-shaped packaging casings. It has to be noted that filling tube 12b represents the inactive position when filling tube 12a, being in the active or operating position, is pivoted outwardly, away from clipping machine 10, about a respective filling tube hinge. Loading new tubular-shaped packaging casing onto a filling tube 12 is particularly possible in the position represented by filling tube 12c in Fig. 1. In the position represented by filling tube 12b in Fig. 1, a casing brake assembly CB required for the production process can be pushed onto filling tube 12b. By means of filling tube assembly 16, filling tubes 12b, 12c can be moved by rotation of filling tube assembly 16 from their respective passive positions to the working position represented by filling tube 12a in Fig. 1.

Revolver filling tube assembly 16 is arranged directly or indirectly at an outlet of a filling unit (not shown) that feeds the filling material, wherein filling tube assembly 16 has two ports to connect each to one filling tube 12. Filling tube assembly 16 is configured in such a way, that filling tubes 12 may be positioned in an active position and a passive position by a rotation of filling tube assembly 16 around central axis A, wherein in the active position filling tube 12 is fluidically connected to the filling unit and in the passive position filling tube 12 is fluidically disconnected to the filling unit. In the passive position, filling tube 12 can be assembled and dissembled from filling tube assembly 16, and a packaging casing 14 may be arranged at filling tube 12. For cleaning reason and product changes different filling tubes 12 must be assembled at clipping machine 10. Further packaging casing 14 stored on the filling tube 12 is finitely, so in regular time periods new packaging casings 14 must be provided.

Clipping machine 10 comprises a magazine 18, wherein magazine 18 is arranged at a table 19 and has a longitudinal magazine axis 20 and has 10 slots for packaging casings 14. Magazine 18 is arranged in such a way, that longitudinal magazine axis 20 is vertical, especially parallel to earth's gravity direction. To change filling tube 12 at filling tube assembly 16 a gripping robot 22 is provided at clipping machine 10. Robot 22 may be arranged between clipping device 11 and magazine 18, as shown in Fig. 1. Alternatively, robot 22 may be arranged near filling tube assembly 16, in particular not in the front of clipping machine 10 but either in the back of clipping machine 10. Robot 22 comprises a gripper with a left blade 24a and a right blade 24b, wherein blades 24a, 24b can be moved together to grip packaging casing 14. Blades 24a, 24b may have a soft material or coating to protect packaging casing 14 of damage due to handling by robot 22. Blades 24a, 24b have substantially the same length as packaging casing 14, wherein in the gripped state blades 24a, 24b enclose packaging casing 14 circumferentially and longitudinally, preferably completely. Robot 22 may provide different blades 24a, 24b with different lengths or diameters to handle different packaging casings 14.

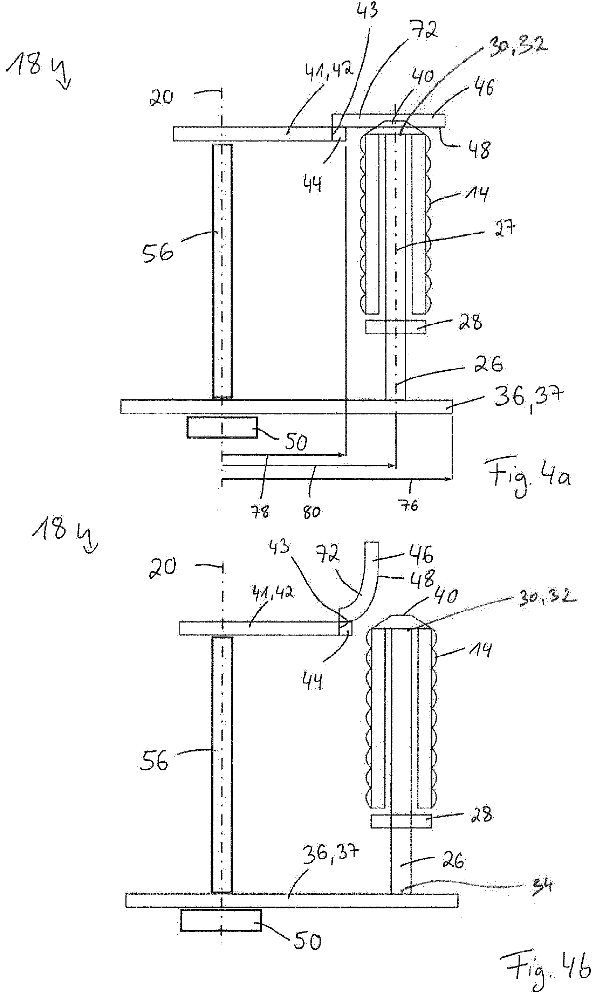

A tubular packaging casing 14 made of a thin sheet material is stored in a shirred form, like a concertina (cf. Figs. 4a, 4b), on filling tube 12a. The front end of packaging casing 14 facing in feeding direction F is closed by at least one closing means, such as a closure clip, by, for example, a clipping device 11. A feeding pump of a filling unit or filler (not shown) is feeding the filling material into packaging casing 14 while the feeding pressure of the filling material is pulling packaging casing 14 off from filling tube 12a. Gathering means of clipping unit 10 form a plait-like portion of filled packaging casing 14 which is at least approximately free from filling material. Clipping unit 10 then places and closes at least one closure clip at the plait-like portion forming the rear end of the sausage-shaped product just produced, i.e. the end pointing against the feeding direction F.

Robot 22 grasps a packaging casing 14 and moves it from magazine 18 to filling tube 12c, wherein packaging casing 14 is slid on filling tube 12c arranged at filling tube assembly 16. By rotating filling tube assembly 16, filling tube 12c can be brought from the passive position in the active position, the filling process can be continued with the packaging casing 14. It is advantageous if filling tube 12c is loaded with a new packaging casing 14 while filling tube 12a can be operated.

To store packaging casings 14 at magazine 18, magazine 18 comprises a plurality of mandrels 26, in the present case in particular ten mandrels 26, extending along a mandrel axis 27 parallel to magazine axis 20 each to receive one packaging casing 14. Mandrels 26 comprise a mandrel rod 29 and a support element 28, preferably formed as a mandrel collar, for supporting a packaging casing 14. Support element 28 is arranged at mandrel rod 29 and extending perpendicular to mandrel axis 27, wherein packaging casing 14 is resting against support element 28 due to earth's gravity. So, packaging casing 14 is arranged above support element 28 at mandrel 26. The support element 28 has a larger cross-section than the mandrel rod 29 for a secure resting of packaging casing 14. Support element 28 is reversibly radial and/or axial adjustable regarding mandrel axis 27. Thus, packaging casings 14 with different sizes may be stored in magazine 18.

Further, mandrels 26 each comprise a first end 30 with a free end 32 and a second end 34, wherein first end 30 and second end 34 are spaced apart along mandrel axis 27. Mandrels 26 are arranged releasably or non-releasably at their second end 34 at mandrel carrier means 36, in particular a first plate 37, wherein mandrels 26 are arranged at mandrel carrier means 36 along a circular ring that is perpendicular to magazine axis 27. In the shown embodiment, ten mandrels 26 are provided, which have an angular distance of about 36°.

To store one packaging casing 14 at one mandrel 26, mandrel 26 is positioned in such a way, that packaging casing 14 is arranged at free end 32 of mandrel 26 in extension of mandrel axis 27. Afterwards packaging casing 14 is slid over mandrel 26 by a relative movement of packaging casing 14 parallel to magazine axis 20.

Holding means 42, in particular a second plate, is provided near first end 30 of mandrel 26. Holding means 42 are spaced apart from mandrel carrier means 36 along magazine axis 20 and extend parallel to mandrel carrier means 36. At an outer circumference 43 of holding means 42, teeth 44 protruding perpendicular to magazine axis 20 are provided, wherein at each tooth 44 a retaining element 46 is provided for releasably retaining packaging casing 14 on mandrel 26. Holding means 42 provide for every mandrel 26 one retaining element 46.

In Figs. 4a and 4b, one mandrel 26 with one packaging casing 14 is shown, wherein in Fig. 4a retaining element 46 is in a first position in which it releases free end 32 of mandrel 26 and wherein in Fig. 4b retaining element 46 is in second position in which the free end 32 of mandrel 26 is capped by retaining element 46. In second position, packaging casing 14 is secured by retaining element 46. In first position, packaging casing 14 can be removed from mandrel 26.

Retaining element 46 comprises a retaining surface 48 facing packaging casing 14. In second position, retaining surface 48 is substantially perpendicular to mandrel axis 27. Retaining element 46 is made of a material which is flexible, especially in a joint area. The retaining element 46 is formed by a flexible lip that is reversibly movable between the first position and the second position, wherein the retaining element 46 is arranged at holding means 42, in particular at a second plate 41, in such a way, that retaining element 46 urges by its own in the second position. Retaining element 46 comprises material that is suitable for a plurality of reversible deformations, like rubber or elastomers.

Mandrel carrier means 36 are rotatory moveable around magazine axis 20. Therefore, mandrel carrier means 36 comprise first driven means 50 to drive mandrel carrier means 36, in particular first plate 37, wherein first driven means 50 is arranged below first plate 37 opposite to mandrels 26. Due to the rotation of mandrel carrier means 36, in particular first plate 37, different packaging casing 14 can be positioned at a same picking-up position. Thus, packaging casing 14 can always be provided at the same picking position, so an operator and/or robot 22 can pick up packaging casing 14 easily, securely, and repeatedly.

Robot 22 comprises a basis 52 and three elements 54, each of which is movably coupled to each other for forming a robot arm. Mandrel carrier means 36, in particular first plate 37 and holding means 42, in particular second plate 41, are connected by a shaft 56 extending along magazine axis 20. Thus, a rotation of mandrel carrier means 36, in particular first plate 37, causes a similar rotation of holding means 42, in particular second plate 41, mandrels 26 and packaging casing 14 stored at mandrels 26.

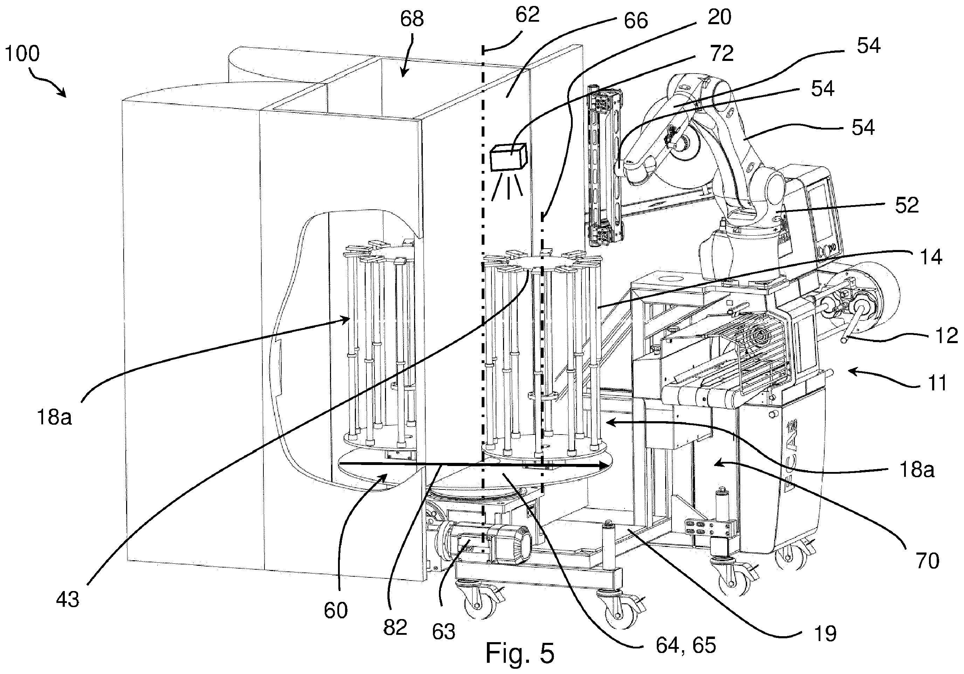

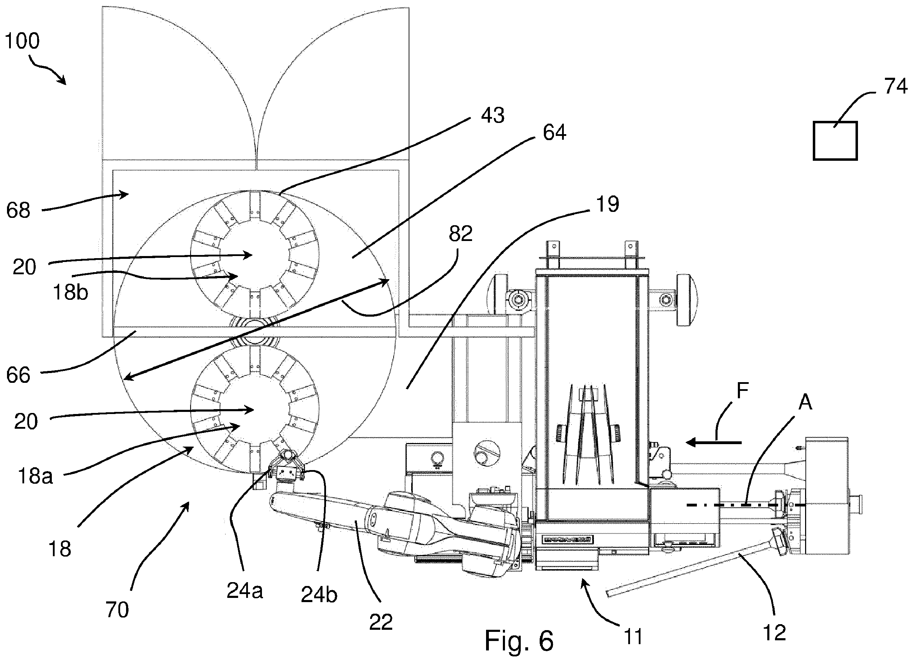

In order to provide a larger number of storage places for packaging casing 14, it is particularly advantageous to provide a revolver 60 comprising two magazines 18, according to the second embodiment of clipping machine 100 in Figs. 5 and 6. Revolver 60 has an revolver axis 62 and a revolver carrier means 64, in particular a third plate 65, extending perpendicular to revolver axis 62. Revolver carrier means 64, in particular third plate 65, is rotatable with regard to revolver axis 62. Preferably revolver carrier means 64 comprise second driven means 63 to rotate revolver carrier means 64, in particular third plate 65, wherein second driven means 63 are arranged below third plate 65. Both magazines 18 are arranged at revolver carrier means 64, preferably above third plate 65, wherein a rotatory movement of revolver carrier means 64, in particular third plate 65, causes a rotatory movement of both magazines 18 as well.

Preferably, revolver carrier means 64 have a first position in which a first magazine 18a is arranged in a delivery position and a second position in which a second magazine 18b is arranged in a feeding position, wherein the position of first magazine 18a and second magazine 18b are changeable by rotation of revolver carrier means 64 around revolver axis 62. In delivery position packaging casing 14 is picked up from mandrel 16 and in feeding position new packaging casing is arranged at an empty mandrel 16. Due to first position and second position and multiple magazines 18a, 18b, delivery and feeding of packaging casing 14 is possible simultaneously. The first position and the second position are configured in such a way, that that an operator or robot 22 at clipping machine 10 working at the first magazine 18a cannot reach the second magazine 18b and vice versa. Revolver 60 comprises a separating wall 66 for separating the first position from the second position. Separating wall 66 is arranged between first magazine 18a and second magazine 18b. Separating wall 66 is part of a secure zone 68, whereby secure zone 68 is spatially separated from a working area 70 of clipping machine 10. This ensures that robot 22 can work with provided packaging casing 14 at first magazine 18a in first position in working area 70, wherein at the same time a user or robot 22 can refill second magazine 18b with new packaging casings 14 in second position in secure zone 68. Separating wall 66 may be formed as a driven sliding door, wherein the sliding door opens when revolver carrier means 64, in particular third plate 65, rotates and closes when revolver carrier means 64, in particular third plate 65, does not move, or as a flexible film, wherein the flexible film yields to both magazine 18 when they switch their position.

To provide a packaging casing 14 stored on a mandrel 26, magazine 18b is positioned in second position in secure zone 68 by rotating revolver carrier means 64. An operator or a robot similar to robot 22 can insert new packaging casing 14 onto an empty mandrel 26. Mandrel 26 that is being loaded can always be in a feeding position. It is conceivable that the feeding position comprises more than one mandrel 26, in particular two or three mandrels 26.

After magazine 18b is loaded with new packaging casing 14 and all or a plurality of packaging casing 14 have been used from magazine 18a, revolver carrier means 64 is rotated in such a way that second magazine 18b is positioned in first position into working zone 70 and first magazine 18a is moved in second position into secure zone 68. Then, new packaging casing 14 can be picked from magazine 18b in working zone 70 and new packaging casing 14 can be stored on magazine 18a in secure zone 68.

Especially, to detect the state of a mandrel 26, whether a packaging casing 14 is loaded and/or to detect the position of magazine 18 and/or revolver 60 at least one sensor 72 is provided. Sensor 72 may be formed as a position sensor, a magnetic field sensor or a camera with image recognition. At least one sensor 72 may be arranged at mandrel carrier means 36, at mandrel 26, at retaining element 46, at holding means 42 and/or at revolver carrier means 64. Further, a control 74 is provided to machine the signals of sensor 72 and to control the position of revolver 60 and/or revolver carrier means 64 and/or magazines 18a, 18b by triggering first driven means 50 for moving mandrel carrier means 36 and/or by triggering second driven means 63 for moving revolver carrier means 64. Sensor 72 may check if a magazine 18, 18a, 18b has no more packaging casing 14. Sensor 72 sends signals to control 74, wherein control 74 controls magazines 18 and/or revolver 60 based on the signals of sensor 72.

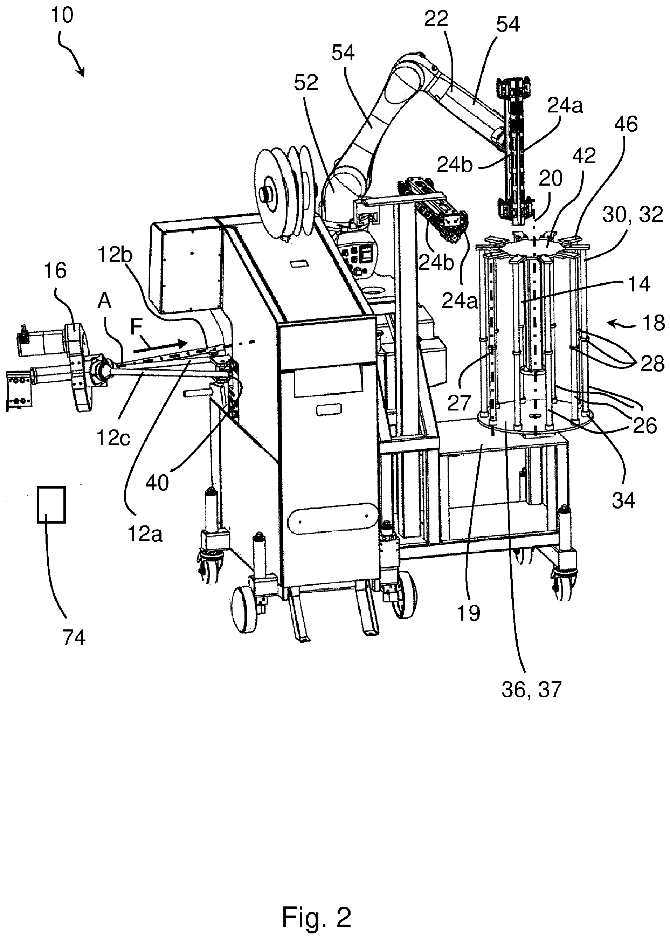

According to Figs. 1 and 2, mandrel carrier means 36, in particular first plate 37, comprises a first diameter 76 and holding means 42, in particular second plate 41, comprises a second diameter 78, wherein first diameter 76 is greater than second diameter 78. Circular ring also comprises a ring diameter 80, wherein first diameter 76 is greater than ring diameter 80 and/or ring diameter 80 is greater than second diameter 78. According to Figs. 5 and 6, revolver carrier means 64, in particular third plate 65, comprises a third diameter 82, wherein third diameter 82 is greater than first diameter 76 and/or greater than second diameter 78 and/or greater than ring diameter 80.

Filling tube assembly 16 arranged upstream clipping machine 10 includes two filling tubes 12. It has to be noted that filling tube assembly 16 may also include more than two filling tubes 12, like three or four filling tubes 12, in order to enable the production of sausage-shaped products with one filling tube 12 in the active position while refilling tubular-shaped packaging casing onto a further filling tube 12 arranged in an inactive position. However, it is also possible that filling tube arrangement 16 includes only one filling tube 12. In this case, for refilling tubular-shaped packaging casing onto the single filling tube, said filling tube 12 has to be brought from its active position into an inactive position, such that during refilling tubular-shaped packaging casing, production of sausage-shaped products is not possible.

Furthermore, in the shown embodiment of clipping machine 10, robot 22 is arranged in the region of the front side of clipping machine 10, such that the robot arm formed by robot elements 54, has to be moved across clipping machine 10. Alternatively, robot 22 may also be arranged at the rear side of clipping machine 10, such that robot 22 moves behind clipping machine 10, without affecting the space in front of clipping machine 10, where e.g. an operator may stay.

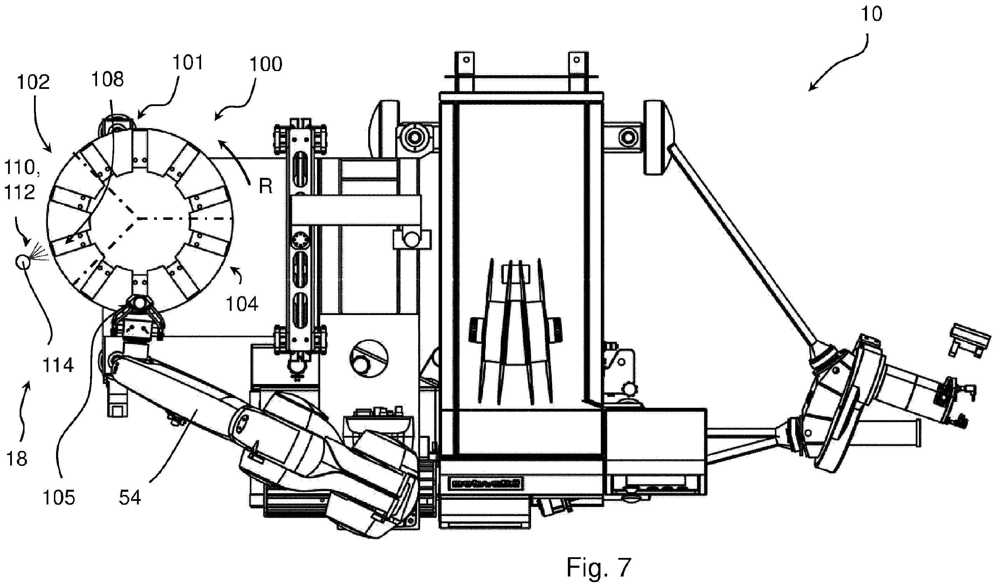

Fig. 7 shows a top view of a clipping machine 10 that is substantially identical to the clipping machine 10 shown in Figs. 1 to 3 with the exception that the magazine 18 further comprises a pre-treatment section 102. Identical or similar components are marked with the same reference signs in Fig. 7. In the embodiment of Fig. 7, the magazine 18 comprises a loading section 100 having a loading position 101, the pre-treatment section 102 and a delivery section 104 having a delivery position 105. The arrangement of sections 100, 102, 104 is illustrated by dashed lines in Fig. 7. The pre-treatment section 102 is arranged between the loading section 100 and the delivery section 104 with respect to a rotation direction R of the mandrel carrier means 36. A mandrel 26 is movable from the loading section 100 to the pre-treatment section 102 by rotating the mandrel carrier means 36 about the magazine axis 20. Further rotation of the mandrel carrier means 36 about the magazine axis 20 moves the mandrel 26 from the pre-treatment section 102 to the delivery section 104. In the embodiment shown in Fig. 7, the pre-treatment section 102 is a quarter sector of the circular footprint of magazine 18.

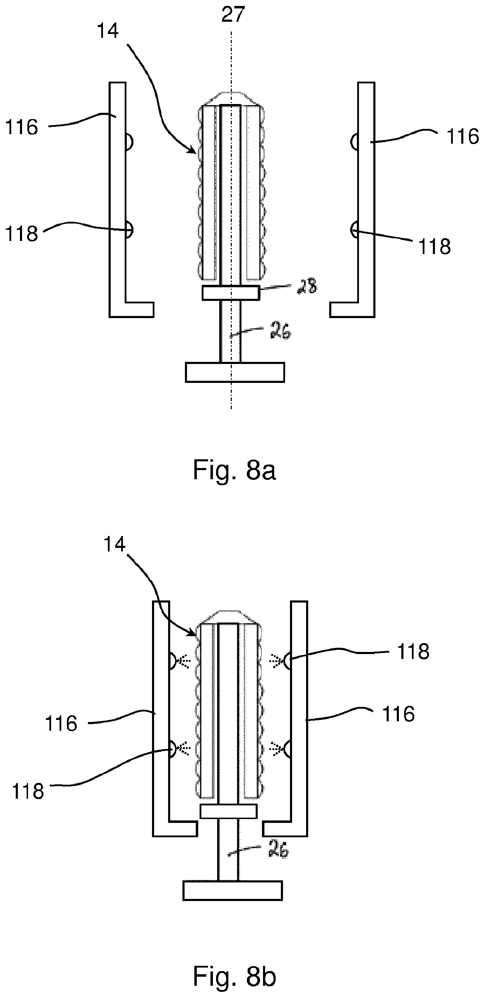

The pre-treatment section 102 comprises a pre-treatment position 108. A pre-treatment device 110 of the magazine 18 is arranged proximate to the pre-treatment position 108. In the embodiment shown in Fig. 8, the pre-treatment device 110 is a moistening device 112 comprising a spray nozzle 114. The spray nozzle 114 faces a mandrel 26 that is in the pre-treatment position 108 and the corresponding packaging casing 14 stored thereon. When a mandrel 26 carrying a packaging casing 14 is in the pre-treatment position 108, a moistening substance, such as brine, in the form of a liquid or a mist is sprayed onto the packaging casing 14 with the spray nozzle 114. Alternatively, the magazine 18 can be configured to pre-treat packaging casings 14 that are continuously moved through the pre-treatment section 102 from the loading section 100 to the delivery section 104. The spray nozzle 114 may be continuously operated or the magazine 18 may be configured to only spray moistening susbtance when a mandrel 26 is in the pre-treatment position 108.

Figs. 8a and 8b show an alternative design of the pre-treatment device 110. In this embodiment, the pre-treatment device 110 comprises two shells 116. For simplicity, the holding means 42 and retaining element 46 are omitted in Figs. 8a und 8b. However, the shells 116 may be adapted so that the retaining element may still retain the packaging casing 14 on the mandrel 26 while the shells 116 are enclosing the mandrel 26 and the packaging casing 14 stored thereon. The shells 116 are formed as half shells 116 that each substantially enclose half of the mandrel 26 and the packaging casing 14. The shells 116 are advanced from opposite sides of the mandrel 26. The shells 116 may also be advanced along the mandrel axis (e.g. from top to bottom in Fig. 8a). When the packaging casing 14 and the mandrel 26 are enclosed by the shells 116 as shown in Fig. 8b, pre-treatment liquid is provided to the packaging casing 14 via nozzles 118. The shells 116 prevent spillage of the pre-treatment liquid and allow for efficient use thereof.

In other embodiments, the revolver may comprise the loading section 100, the pre-treatment section 102 and the delivery section 104. The loading section 100 may be the secure zone 68 and/or the delivery section 104 may be the working zone 70. Preferably, the pre-treatment section is arranged between the secure zone 68 and the working zone 70 with respect to a movement direction of a magazine 18 from the secure zone 68 to the working zone 70. The separating wall 66 is then preferably separating the secure zone 68 from the pre-treatment section 102. The pre-treatment section 102 may also be part of the secure zone 68. A second separating wall may be arranged between the pre-treatment section 102 and the working zone 70.

### List of reference signs (part of the description)

- 10, 100: clipping machine
- 11: clamping device
- 12: filling tube
- 14: packaging casing
- 16: filling tube assembly
- 18: magazine
- 19: table
- 20: magazine axis
- 22: robot
- 24a, 24b: left blade, right blade
- 26: mandrel
- 27: mandrel axis
- 28: support element
- 29: mandrel rod
- 30: first mandrel end
- 32: free end of mandrel
- 34: second mandrel end
- 36: mandrel carrier means
- 37: first plate
- 40: feeding opening of filling tube
- 41: second plate
- 42: holding means
- 43: outer circumference of second plate
- 44: teeth of second plate
- 46: retaining element
- 48: retaining surface
- 50: first driven means
- 52: robot basis
- 54: robot element
- 56: shaft
- 60: revolver
- 62: revolver axis
- 63: second driven means
- 64: revolver carrier means
- 65: third plate
- 66: separating wall
- 68: secure zone
- 70: working zone
- 72: sensor
- 74: control
- 76: first diameter of first plate
- 78: second diameter of second plate
- 80: ring diameter of circular ring
- 82: third diameter of third plate
- 100: loading section
- 101: loading position
- 102: pre-treatment section
- 104: delivery section
- 105: delivery position
- 108: pre-treatment position
- 110: pre-treatment device
- 112: wetting device
- 114: spray nozzle
- 116: shell
- 118: nozzle
- A: central axis
- F: filling direction
- R: rotation direction

## Claims

1. A magazine (18) for providing at least one tubular-shaped packaging casing (14) suitable for receiving a flowable filling material in the production of sausage-shaped products, in particular sausages, comprising:
- a longitudinal magazine axis (20),
- at least one mandrel (26) for holding at least one packaging casing (14), wherein the at least one mandrel (26) has a longitudinal mandrel axis (27), which extends at least approximately parallel to the longitudinal magazine axis (20), and wherein the at least one mandrel (26) comprises a free end (32) at a first mandrel end (30),
- at least one retaining element (46) arranged at least at the proximity of the first mandrel end (30) for releasably retaining the packaging casing (14) on the at least one mandrel (26), and
- a pre-treatment device (110) for pre-treating a packaging casing (14) held on a mandrel (26),
wherein the pre-treatment device (110) is a moistening device (112) for providing a moistening substance, such as water and/or brine, in form of a liquid and/or a mist to a packaging casing (14) held on the mandrel (26), and
wherein the moistening device (112) comprises one or more spray nozzles (114) for spraying moistening substance onto the packaging casing (14).

2. The magazine (18) according to claim 1,
wherein the longitudinal magazine axis (20) is oriented at least approximately vertically.

3. The magazine (18) according to any of claims 1 or 2,
wherein the at least one retaining element (46) has at least one first section in which it releases the free end (32) of the at least one mandrel (26) and at least one second section in which the free end (32) of the at least one mandrel (26) is capped by the at least one retaining element (46), and/or wherein the at least one retaining element (46) is made of a material which is elastic at least in sections.

4. The magazine (18) according to any of the preceding claims,
wherein the at least one mandrel (26) has a second mandrel end (34) spaced apart from the first mandrel end (30) along the longitudinal mandrel axis (27) and is attached to mandrel carrier means (36).

5. The magazine (18) according to claim 4,
wherein the mandrel carrier means (36) are rotatable around the longitudinal magazine axis (20).

6. The magazine (18) according to claim 4 or 5,
wherein the at least one retaining element (46) is held by holding means (42) coupled by a shaft (56) to the mandrel carrier means (36) for supporting the holding means (42) and transmitting forces from the mandrel carrier means (36) to the holding means (46),
wherein preferably the mandrel carrier means (36) have a first diameter (76) and the holding means (42) have a second diameter (78), and wherein the first diameter (76) is greater than the second diameter (78).

7. The magazine (18) according to any of claims 4 to 6,
wherein the at least one mandrel (26) is arranged at the mandrel carrier means (36) along a circular ring that is perpendicular to the magazine axis (20),
wherein preferably the circular ring has a ring diameter (80), and wherein the first diameter (76) is greater than the ring diameter (80) and/or the ring diameter (80) is larger than the second diameter (78).

8. The magazine (18) according to any of preceding claims,
wherein the at least one mandrel (26) comprises at least one support element (28) for supporting the packaging casing (14), the at least one support element (28) is preferably reversibly adjustable in its position along the mandrel (26).

9. The magazine (18) according to any of the preceding claims, wherein a pre-treatment section (102), preferably comprising the pre-treatment device (110), is arranged between a loading position of the magazine (18) for placing a packaging casing (14) on a mandrel (26) and a delivery position of the magazine (18) for removing a packaging casing (14) from a mandrel (26), with respect to a moving direction (R) of the at least one mandrel (26) from the loading position to the delivery position.

10. The magazine (18) according to any of the preceding claims, wherein the at least one mandrel (26) comprises an inner channel and at least one opening extending from the inner channel to an outer mandrel surface on which a packaging casing (14) can be arranged, and/or wherein the moistening device (112) comprises a fluid coupling, configured to couple to the at least one mandrel (26) for providing the moistening substance to the inner channel of the mandrel (26), preferably when the mandrel (26) is arranged at a pre-treatment position of the pre-treatment section (102).

11. The magazine (18) according to any of the preceding claims, wherein the pre-treatment device (110) comprises one or more shells (116), the one or more shells (116) being configured to be put over a mandrel (26) and a packaging casing (14) held thereon.

12. A revolver (60) comprising at least two magazines (18a, 18b) according to any of claims 1 to 11,
wherein the at least two magazines (18a, 18b) are arranged on revolver carrier means (64), which are rotatable around a revolver axis (62) extending at least approximately parallel to the longitudinal magazine axis (20).

13. The revolver (60) according to claim 12,
wherein the revolver carrier means (64) have at least a first position in which one magazine (18a) is arranged in a delivery position and at least a second position in which the further magazine (18b) is arranged in a feeding position, wherein the revolver (60) preferably comprises at least one separating wall (66) for separating the first position from the second position.

14. The revolver (60) according to claim 13, wherein the revolver carrier means (64) further have a pre-treatment position between the first position and the second position with respect to a movement direction (R) from the first position to the second position, and wherein the revolver (60) comprises a pre-treatment device (110) for pre-treating packaging casings (14) held on mandrels (26) of a magazine (18) arranged in the pre-treatment position.

15. A production machine (10, 100), in particular a clipping machine (10), for filling and closing a tubular or bag-shaped packaging casing (14) to produce sausage-shaped products, in particular sausages, comprising:
- at least one magazine (18) according to any of claims 1 to 11 and/or at least one revolver (60) according to any of claims 12 to 14, and
- a robot (22) to pick-up a packaging casing (14) provided at the magazine (18) and/or at the revolver (60) and to place it at a filling unit.

## Patentansprüche

1. Magazin (18) zur Bereitstellung wenigstens einer schlauchförmigen Verpackungshülle (14), die zur Aufnahme eines fließfähigen Füllguts bei der Herstellung von wurstförmigen Produkten, insbesondere Würsten, geeignet ist, umfassend:
- eine Magazinlängsachse (20),
- wenigstens einen Dorn (26) zum Halten wenigstens einer Verpackungshülle (14), wobei der wenigstens eine Dorn (26) eine Dornlängsachse (27) aufweist, die sich wenigstens annähernd parallel zur Magazinlängsachse (20) erstreckt, und wobei der wenigstens eine Dorn (26) ein freies Ende (32) an einem ersten Dornende (30) aufweist,
- wenigstens ein Halteelement (46), das wenigstens in der Nähe des ersten Dornendes (30) angeordnet ist, um die Verpackungshülle (14) lösbar auf dem wenigstens einen Dorn (26) zu halten, und
- eine Vorbehandlungsvorrichtung (110) zum Vorbehandeln einer auf einem Dorn (26) gehaltenen Verpackungshülle (14),
wobei die Vorbehandlungsvorrichtung (110) eine Befeuchtungsvorrichtung (112) ist zum Aufbringen einer Befeuchtungssubstanz, wie Wasser und/oder Sole, in Form einer Flüssigkeit und/oder eines Nebels auf eine auf dem Dorn (26) gehaltene Verpackungshülle (14), und
wobei die Befeuchtungsvorrichtung (112) eine oder mehrere Sprühdüsen (114) zum Sprühen der Befeuchtungssubstanz auf die Verpackungshülle (14) umfasst.

2. Magazin (18) nach Anspruch 1,
wobei die Magazinlängsachse (20) wenigstens annähernd vertikal ausgerichtet ist.

3. Magazin (18) nach einem der Ansprüche 1 oder 2,
wobei das wenigstens eine Halteelement (46) wenigstens eine erste Sektion aufweist, in der es das freie Ende (32) des wenigstens einen Dorns (26) freigibt, und wenigstens eine zweite Sektion, in der das freie Ende (32) des wenigstens einen Dorns (26) durch das wenigstens eine Halteelement (46) abgedeckt ist, und/oder
wobei das wenigstens eine Halteelement (46) aus einem Material hergestellt ist, das wenigstens in Sektionen elastisch ist.

4. Magazin (18) nach einem der vorangehenden Ansprüche,
wobei der wenigstens eine Dorn (26) ein zweites Dornende (34) aufweist, das von dem ersten Dornende (30) entlang der Dornlängsachse (27) beabstandet ist und an Dornträgermitteln (36) angebracht ist.

5. Magazin (18) nach Anspruch 4,
wobei die Dornträgermittel (36) um die Magazinlängsachse (20) drehbar sind.

6. Magazin (18) nach Anspruch 4 oder 5,
wobei das wenigstens eine Halteelement (46) durch Haltemittel (42) gehalten wird, die durch einen Schaft (56) mit den Dornträgermitteln (36) gekoppelt sind, um die Haltemittel (42) zu stützen und Kräfte von den Dornträgermitteln (36) auf die Haltemittel (46) zu übertragen,
wobei vorzugsweise die Dornträgermittel (36) einen ersten Durchmesser (76) aufweisen und die Haltemittel (42) einen zweiten Durchmesser (78) aufweisen, und wobei der erste Durchmesser (76) größer ist als der zweite Durchmesser (78).

7. Magazin (18) nach einem der Ansprüche 4 bis 6,
wobei der wenigstens eine Dorn (26) an den Dornträgermitteln (36) entlang eines Kreisrings angeordnet ist, der senkrecht zur Magazinachse (20) verläuft,
wobei der Kreisring vorzugsweise einen Ringdurchmesser (80) aufweist, und
wobei der erste Durchmesser (76) größer ist als der Ringdurchmesser (80) und/oder der Ringdurchmesser (80) größer ist als der zweite Durchmesser (78).

8. Magazin (18) nach einem der vorangehenden Ansprüche,
wobei der wenigstens eine Dorn (26) wenigstens ein Stützelement (28) zum Stützen der Verpackungshülle (14) umfasst, wobei das wenigstens eine Stützelement (28) vorzugsweise reversibel in seiner Position entlang des Dorns (26) einstellbar ist.

9. Magazin (18) nach einem der vorangehenden Ansprüche, wobei eine Vorbehandlungssektion (102), die vorzugsweise die Vorbehandlungsvorrichtung (110) umfasst, zwischen einer Ladeposition des Magazins (18) zum Auflegen einer Verpackungshülle (14) auf einen Dorn (26) und einer Zuführposition des Magazins (18) zum Abnehmen einer Verpackungshülle (14) von einem Dorn (26) angeordnet ist, und zwar in Bezug auf eine Bewegungsrichtung (R) des wenigstens einen Dorns (26) von der Ladeposition zu der Zuführposition.

10. Magazin (18) nach einem der vorangehenden Ansprüche, wobei der wenigstens eine Dorn (26) einen inneren Kanal und wenigstens eine Öffnung umfasst, die sich von dem inneren Kanal zu einer äußeren Dornoberfläche erstreckt, auf der eine Verpackungshülle (14) angeordnet werden kann, und/oder wobei die Befeuchtungsvorrichtung (112) eine Fluid-Kupplung umfasst, die dazu konfiguriert ist, mit dem wenigstens einen Dorn (26) gekoppelt zu werden, um den inneren Kanal des Dorns (26) mit der Befeuchtungssubstanz zu versorgen, vorzugsweise wenn der Dorn (26) an einer Vorbehandlungsposition der Vorbehandlungssektion (102) angeordnet ist.

11. Magazin (18) nach einem der vorangehenden Ansprüche, wobei die Vorbehandlungsvorrichtung (110) eine oder mehrere Schalen (116) umfasst, wobei die eine oder die mehreren Schalen (116) dazu konfiguriert sind, über einen Dorn (26) und eine darauf gehaltene Verpackungshülle (14) gesetzt zu werden.

12. Revolver (60), der wenigstens zwei Magazine (18a, 18b) nach einem der Ansprüche 1 bis 11 umfasst,
wobei die wenigstens zwei Magazine (18a, 18b) auf Revolverträgermitteln (64) angeordnet sind, die um eine Revolverachse (62) drehbar sind, die sich wenigstens annähernd parallel zur Magazinlängsachse (20) erstreckt.

13. Revolver (60) nach Anspruch 12,
wobei die Revolverträgermittel (64) wenigstens eine erste Position aufweisen, in der ein Magazin (18a) in einer Zuführposition angeordnet ist, und wenigstens eine zweite Position, in der das weitere Magazin (18b) in einer Zuführposition angeordnet ist, wobei der Revolver (60) vorzugsweise wenigstens eine Trennwand (66) zum Trennen der ersten Position von der zweiten Position aufweist.

14. Revolver (60) nach Anspruch 13, wobei die Revolverträgermittel (64) ferner eine Vorbehandlungsposition zwischen der ersten Position und der zweiten Position in Bezug auf eine Bewegungsrichtung (R) von der ersten Position zur zweiten Position aufweisen, und wobei der Revolver (60) eine Vorbehandlungsvorrichtung (110) zum Vorbehandeln von Verpackungshüllen (14) umfasst, die auf Dornen (26) eines in der Vorbehandlungsposition angeordneten Magazins (18) gehalten werden.

15. Produktionsmaschine (10, 100), insbesondere Clipmaschine (10), zum Füllen und Verschließen einer schlauch- oder beutelförmigen Verpackungshülle (14) zur Herstellung von wurstförmigen Produkten, insbesondere von Würsten, umfassend:
- wenigstens ein Magazin (18) nach einem der Ansprüche 1 bis 11 und/oder wenigstens einen Revolver (60) nach einem der Ansprüche 12 bis 14, und
- einen Roboter (22) zum Aufnehmen einer am Magazin (18) und/oder am Revolver (60) bereitgestellten Verpackungshülle (14) und zum Absetzen derselben an einer Abfülleinheit.

## Revendications

1. Chargeur (18) destiné à fournir au moins une enveloppe d'emballage (14) de forme tubulaire appropriée pour recevoir un matériau de remplissage pouvant s'écouler dans la production de produits en forme de saucisses, en particulier de saucisses, comprenant :
- un axe longitudinal (20) de chargeur,
- au moins un mandrin (26) destiné à maintenir au moins une enveloppe d'emballage (14), ledit au moins un mandrin (26) présentant un axe longitudinal (27) de mandrin qui s'étend au moins approximativement parallèlement à l'axe longitudinal (20) de chargeur et ledit au moins un mandrin (26) comprenant une extrémité libre (32) au niveau d'une première extrémité (30) de mandrin,
- au moins un élément de retenue (46) agencé au moins à proximité de la première extrémité (30) de mandrin afin de retenir de manière libérable l'enveloppe d'emballage (14) sur ledit au moins un mandrin (26) et
- un dispositif de prétraitement (110) destiné à prétraiter une enveloppe d'emballage (14) maintenue sur un mandrin (26),
le dispositif de prétraitement (110) étant un dispositif d'humidification (112) destiné à fournir une substance d'humidification, telle que de l'eau et/ou de la saumure, sous la forme d'un liquide et/ou d'un brouillard à une enveloppe d'emballage (14) maintenue sur le mandrin (26) et
le dispositif d'humidification (112) comprenant une ou plusieurs buses de pulvérisation (114) destinées à pulvériser une substance d'humidification sur l'enveloppe d'emballage (14).

2. Chargeur (18) selon la revendication 1,
l'axe longitudinal (20) de chargeur étant orienté au moins approximativement verticalement.

3. Chargeur (18) selon l'une quelconque des revendications 1 ou 2,
ledit au moins un élément de retenue (46) présentant au moins une première section dans laquelle il libère l'extrémité libre (32) dudit au moins un mandrin (26) et au moins une seconde section dans laquelle l'extrémité libre (32) dudit au moins un mandrin (26) est coiffée par ledit au moins un élément de retenue (46) et/ou
ledit au moins un élément de retenue (46) étant constitué d'un matériau qui est élastique au moins par sections.

4. Chargeur (18) selon l'une quelconque des revendications précédentes,
ledit au moins un mandrin (26) présentant une seconde extrémité (34) de mandrin écartée de la première extrémité (30) de mandrin le long de l'axe longitudinal (27) de mandrin et étant attachée à des moyen de support (36) de mandrin.

5. Chargeur (18) selon la revendication 4,
les moyens de support (36) de mandrin pouvant tourner autour de l'axe longitudinal (20) de chargeur.

6. Chargeur (18) selon la revendication 4 ou 5,
ledit au moins un élément de retenue (46) étant maintenu par des moyens de maintien (42) accouplés par une tige (56) aux moyens de support (36) de mandrin afin de supporter les moyens de maintien (42) et de transmettre des forces à partir des moyens de support (36) de mandrin aux moyens de maintien (46), de préférence, les moyens de support (36) de mandrin présentant un premier diamètre (76) et les moyens de maintien (42) présentant un second diamètre (78) et le premier diamètre (76) étant supérieur au second diamètre (78).

7. Chargeur (18) selon l'une quelconque des revendications 4 à 6,
ledit au moins un mandrin (26) étant agencé au niveau des moyens de support (36) de mandrin le long d'une bague circulaire qui est perpendiculaire à l'axe (20) de chargeur,
de préférence la bague circulaire présentant un diamètre (80) de bague et
le premier diamètre (76) étant supérieur au diamètre (80) de bague et/ou le diamètre (80) de bague étant supérieur au second diamètre (78).

8. Chargeur (18) selon l'une quelconque des revendications précédentes,
ledit au moins un mandrin (26) comprenant au moins un élément support (28) destiné à supporter l'enveloppe d'emballage (14), ledit au moins un élément support (28) étant de préférence ajustable de manière réversible dans sa position le long du mandrin (26).

9. Chargeur (18) selon l'une quelconque des revendications précédentes, une section de prétraitement (102), comprenant de préférence le dispositif de prétraitement (110), étant agencée entre une position de chargement du chargeur (18) afin de placer une enveloppe d'emballage (14) sur un mandrin (26) et une position de distribution du chargeur (18) afin de retirer une enveloppe d'emballage (14) d'un mandrin (26), par rapport à un sens de déplacement (R) dudit au moins un mandrin (26) à partir de la position de chargement vers la position de distribution.

10. Chargeur (18) selon l'une quelconque des revendications précédentes, ledit au moins un mandrin (26) comprenant un canal interne et au moins une ouverture s'étendant à partir du canal interne vers une surface externe de mandrin sur laquelle une enveloppe d'emballage (14) peut être agencée et/ou le dispositif d'humidification (112) comprenant un accouplement à fluide, conçu pour s'accoupler audit au moins un mandrin (26) afin de fournir la substance d'humidification au canal interne du mandrin (26), de préférence lorsque le mandrin (26) est agencé à une position de prétraitement de la section de prétraitement (102).

11. Chargeur (18) selon l'une quelconque des revendications précédentes, le dispositif de prétraitement (110) comprenant une ou plusieurs coques (116), ladite une ou lesdites plusieurs coques (116) étant conçues pour être placées sur un mandrin (26) et une enveloppe d'emballage (14) maintenue sur celui-ci.

12. Plateau tournant (60) comprenant au moins deux chargeurs (18a, 18b) selon l'une quelconque des revendications 1 à 11,
lesdits au moins deux chargeurs (18a, 18b) étant agencés sur des moyens de support (64) de plateau tournant, qui peuvent tourner autour d'un axe (62) de plateau tournant s'étendant au moins approximativement parallèlement à l'axe longitudinal (20) de chargeur.

13. Plateau tournant (60) selon la revendication 12,
les moyens de support (64) de plateau tournant présentent au moins une première position dans laquelle un chargeur (18a) est agencé dans une position de distribution et au moins une seconde position dans laquelle l'autre chargeur (18b) est agencé dans une position d'alimentation, le plateau tournant (60) comprenant de préférence au moins une paroi de séparation (66) destinée à séparer la première position de la seconde position.

14. Plateau tournant (60) selon la revendication 13, les moyens de support (64) de plateau tournant présentant en outre une position de prétraitement entre la première position et la seconde position par rapport à un sens de déplacement (R) à partir de la première position vers la seconde position et le plateau tournant (60) comprenant un dispositif de prétraitement (110) destiné à prétraiter des enveloppes d'emballage (14) maintenues sur des mandrins (26) d'un chargeur (18) agencé dans la position de prétraitement.

15. Machine de production (10, 100), en particulier une machine d'agrafage (10), destinée à remplir et à fermer une enveloppe d'emballage (14) tubulaire ou en forme de sac afin de produire des produits en forme de saucisse, en particulier des saucisses, comprenant :
- au moins un chargeur (18) selon l'une quelconque des revendications 1 à 11 et/ou au moins un plateau tournant (60) selon l'une quelconque des revendications 12 à 14 et
- un robot (22) destiné à saisir une enveloppe d'emballage (14) disposée au niveau du chargeur (18) et/ou au niveau du plateau tournant (60) et à la placer au niveau d'une unité de remplissage.
